# EUROPÄISCHE PATENTSCHRIFT

(11) **EP 2 707 267 B1**
(45) Veröffentlichungstag und Bekanntmachung des Hinweises auf die Patenterteilung: **06.03.2019**
(21) Anmeldenummer: 12728381.0
(22) Anmeldetag: 26.04.2012
(51) Int. Cl.: B61B 10/04

(54) **SPINDELFÖRDERER UND ANLAGE ZUM BEHANDELN VON WERKSTÜCKEN MIT EINEM SOLCHEN**
SPINDLE CONVEYOR AND PLANT FOR TREATING WORKPIECES HAVING SUCH A SPINDLE CONVEYOR
CONVOYEUR À BROCHES ET SYSTÈME DE TRAITEMENT DE PIÈCES AVEC CE DERNIER

(30) Priorität: 07.05.2011 DE 102011100826
(43) Veröffentlichungstag der Anmeldung: 19.03.2014
(73) Patentinhaber: Eisenmann SE, 71032 Böblingen (DE)
(72) Erfinder: BINDER, Dietmar, 71088 Holzgerlingen (DE); HOFBAUER, Ulrich, 71126 Gäufelden (DE)
(74) Vertreter: Ostertag & Partner Patentanwälte mbB
(86) Internationale Anmeldenummer: PCT/EP2012/001779
(87) Internationale Veröffentlichungsnummer: WO 2012/152379

(56) Entgegenhaltungen:
- US-A- 5 067 414
- US-A1- 2003 005 884
- US-A1- 2003 213 675

## Beschreibung

Die Erfindung betrifft einen Spindelförderer zum Fördern von Werkstücken, insbesondere von Fahrzeugrädern, mit
a) einem Schienensystem, welches wenigstens eine Tragschiene umfasst;
b) mehreren Transportwagen, die jeweils ein auf der Tragschiene in eine Transportrichtung verfahrbares Fahrwerk und eine Trageinrichtung für Werkstücke umfassen, die von dem Fahrwerk mitgeführt wird;
wobei
c) die Trageinrichtung wenigstens eine Werkstückspindel zur Aufnahme des Werkstücks umfasst.

Ein solcher Spindelförderer ist z.B. aus der US 2003/0005884 A1 bekannt. Außerdem betrifft die Erfindung eine Anlage zum Behandeln von Werkstücken, insbesondere von Fahrzeugrädern, mit einem Fördersystem, mittels welchem die Werkstücke durch die Anlage förderbar sind.

Unter einer Werkstückspindel wird vorliegend jedes spindelförmige Element verstanden, welches ein Werkstück entweder unmittelbar oder über eine weitere Halterung aufnehmen kann. Gegebenenfalls kann an einer Werkstückspindel auch ein Tragkorb für Kleinteile befestigt sein, die ihrerseits lose in diesen Tragkorb gelegt werden. Eine solche Werkstückspindel ist in der Regel etwa einen Meter lang, kann unter Umständen jedoch auch nur wenige Zentimeter lang sein, je nachdem was für Werkstücke gefördert werden sollen.

Mittels vom Markt her bekannter Spindelförderer der eingangs genannten Art werden insbesondere Fahrzeugräder durch aufeinander folgende Behandlungsstationen einer Lackieranlage gefördert, in denen die Fahrzeugräder in mehreren Behandlungsschritten mit einer Oberflächenbeschichtung versehen werden. Dabei sind die Werkstückspindeln vertikal ausgerichtet.

In den Behandlungsstationen werden auch die Werkstückspindeln der Transportwagen mit Beschichtungsmaterialien benetzt, weshalb diese von Zeit zu Zeit gereinigt werden müssen.

Bei vom Markt her bekannten Spindelförderern und Anlagen der eingangs genannten Art werden die Transportwagen hierzu durch eine Reinigungsstation geführt, in der die Werkstückspindeln von der Seite her mit einer Reinigungslösung besprüht werden. Dabei kann mit Beschichtungsmaterial beladene Reinigungslösung auf das tiefer liegende Fahrwerk der Transportwagen oder auf das Schienensystem herabtropfen, was zu nachträglichen Verunreinigungen führt. Dies wiederum erhöht den Wartungs- und Reinigungsaufwand, da auch diese Verunreinigungen entfernt werden müssen.

Alternativ werden verunreinigte Werkstückspindeln von den Transportwagen gelöst und gegen gereinigte Werkstückspindeln ausgetauscht.

Es ist daher Aufgabe der Erfindung, einen Spindelförderer und eine Anlage der eingangs genannten Art zu schaffen, bei welchen die Gefahr verringert ist, das Komponenten nachträglich, insbesondere beim Reinigungsvorgang, verunreinigt werden, insbesondere, wenn die Werkstückspindeln beim Reinigen am Transportwagen verbleiben.

Diese Aufgabe wird mit einem Spindelförderer gemäß Anspruch 1 gelöst.

Erfindungsgemäß wird somit ermöglicht, dass die Werkstückspindel zur Seite verkippt werden kann, wodurch sie seitlich über die lichte Kontur des Fahrwerks des Transportwagens sowie über Komponenten des Schienensystem hinaus ragen kann. Dann kann Reinigungslösung von oben auf die Werkstückspindel aufgebracht werden und von der Werkstückspindel abtropfendes Material fällt nach unten in einen Bereich, in dem nun keine Komponenten und Bauteile des Spindelförderers mehr angeordnet sind.

Es ist günstig, wenn eine Kippeinrichtung vorhanden ist, mittels welcher die Werkstückspindel eines Transportwagens zumindest in dem Reinigungsbereich in die Reinigungsstellung und wieder zurück in die Förderstellung bewegbar ist.

Eine Variante besteht darin, dass die Kippeinrichtung eine im Reinigungsbereich angeordnete Kippschiene umfasst, auf der Transportwagen verfahrbar sind und die mittels eines Antriebs um eine Schwenkachse verschwenkbar ist, die parallel zur Transportrichtung verläuft. Wenn sich also ein Transportwagen in der Kippschiene befindet, kann dieser gemeinsam mit der Kippschiene verkippt werden, so dass dessen Werkstückspindel zur Seite geneigt wird.

Hierbei ist es von Vorteil, wenn die Kippeinrichtung einen separaten Antrieb für Transportwagen umfasst, mittels welchem Transportwagen, die sich in dem Reinigungsbereich befinden, unabhängig von Transportwagen antreibbar sind, die sich nicht im Reinigungsbereich befinden. Insbesondere erfolgt die Reinigung bei einer derartigen Kippeinrichtung intermittierend, so dass die Transportwagen mit zu reinigender Werkstückspindel wahlweise angehalten und angetrieben werden müssen, was mit einem separaten Antrieb besser erreicht werden kann als bei Nutzung des Antriebs in den übrigen Bereichen des Schienensystems.

Um einen kontinuierlichen Durchlauf von Transportwagen durch den Reinigungsbereich zu ermöglichen, kann die Kippeinrichtung alternativ durch einen Torsionsabschnitt der Tragschiene ausgebildet sein, in dem zumindest ein das Fahrwerk der Transportwagen führendes Führungsprofil der Tragschiene so tordiert ist, dass Transportwagen beim Durchfahren des Torsionsabschnitts zur Seite verkippt werden, bis deren Werkstückspindel ihre Reinigungsstellung einnimmt.

Dabei kann es günstig sein, wenn die Tragschiene ein Profilpaar aus einem Führungsprofil für das Fahrwerk der Transportwagen und einem Führungsprofil für eine Antriebskette umfasst, wobei die Führungsprofile jeweils in sich und als Profilpaar so tordiert werden, dass Transportwagen beim Durchfahren des Torsionsabschnitts zur Seite verkippt werden, bis deren Werkstückspindel ihre Reinigungsstellung einnimmt.

Erneut alternativ kann die Kippeinrichtung als Gelenk ausgebildet ist, mittels welchem die Werkstückspindel an dem Fahrwerk des Transportwagens gelagert ist, so dass die Werkstückspindel aus der Förderstellung um eine Schwenkachse, die parallel zur Transportrichtung verläuft, in die Reinigungsstellung abgeknickt werden kann. In diesem Fall kann die Ausrichtung der Werkstückspindel beispielsweise durch eine Kulissenführung vorgegeben werden.

Im Hinblick auf die Anlage der eingangs genannten Art wird die oben genannte Aufgabe dadurch gelöst, dass das Fördersystem ein Spindelförderer mit einigen oder allen der oben erläuterten Merkmale ist.

Die Vorteile stimmen dabei sinngemäß entsprechend mit den oben zum Spindelförderer erläuterten Vorteilen überein.

Nachstehend werden Ausführungsbeispiele der Erfindung anhand der Zeichnungen näher erläutert. In diesen zeigen:
- Figur 1: eine Seitenansicht einer Reinigungszone eines bodengeführten Spindelförderers mit auf einem Schienensystem fahrenden Transportwagen, die jeweils eine Werkzeugspindel mit sich führen;
- Figur 2: einen Schnitt der Reinigungszone von Figur 1 entlang der dortigen Schnittlinie II-II mit Blick entgegen einer Transportrichtung in Richtung auf einen Zulaufabschnitt einer Tragschiene des Schienensystems, der in einen Reinigungsbereich mündet;
- Figur 3: einen Schnitt der Reinigungszone von Figur 1 entlang der dortigen Schnittlinie III-III mit Blick entgegen der Transportrichtung in Richtung auf eine Kippeinrichtung mit einer zur Seite verkippbaren Kippschiene in dem Reinigungsbereich der Reinigungszone;
- Figur 4: einen der Figur 3 entsprechenden Schnitt durch die Reinigungszone mit um 90° zur Seite geneigter Kippschiene, die einen Transportwagen führt;
- Figuren 5 bis 7: hintereinander angeordnete Schnitte eines Teiltorsionsabschnitts der Tragschiene in dem Reinigungsbereich eines Spindelförderers gemäß einem zweiten Ausführungsbeispiel;
- Figuren 8 bis 10: hintereinander angeordnete Schnitte eines Volltorsionsabschnitts der Tragschiene in dem Reinigungsbereich eines Spindelförderers gemäß einem dritten Ausführungsbeispiel;
- Figuren 11 bis 13: verschiedene Phasen eines Transportwagens mit klappbar gelagerter Werkstückspindel bei deren abklappen aus einer Förderstellung in eine Reinigungsstellung.

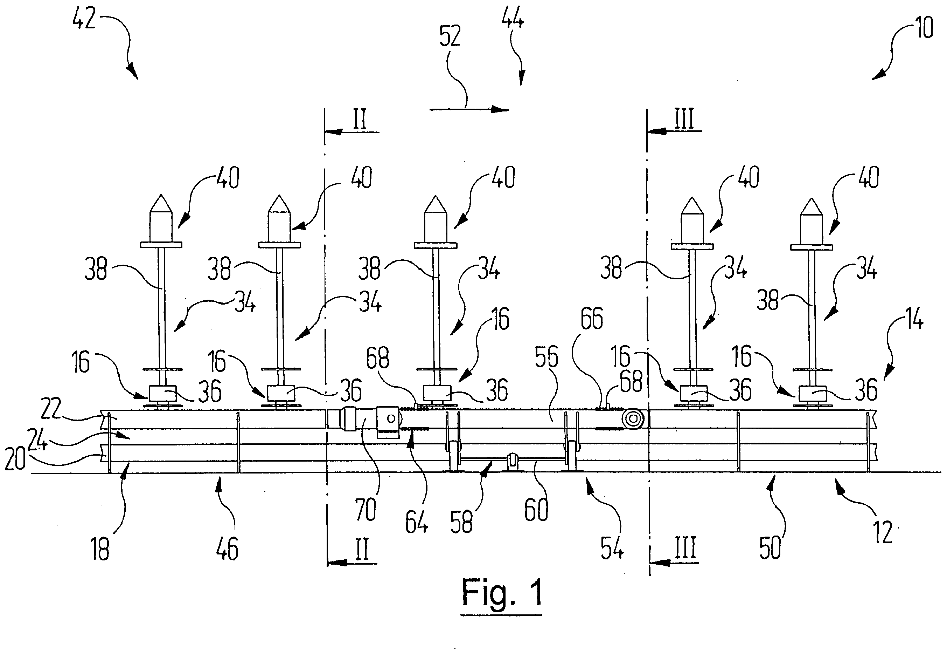

In Figur 1 ist mit 10 insgesamt eine Oberflächenbehandlungsanlage bezeichnet, in der nicht eigens gezeigte Werkstücke mittels eines Fördersystems in Form eines bodengeführten Spindelförderers 12 durch die Anlage 10 hindurch bewegt werden. Der Spindelförderer 12 umfasst ein Schienensystem 14, auf welchem eine Vielzahl von Transportwagen 16, die mit einem oder mehreren Werkstücken beladen sind, durch mehrere hintereinander folgende Behandlungsstationen geführt werden, in denen die Werkstücke beispielsweise in mehreren Schritten mit einem Lack versehen werden. Nähere Details zu den Behandlungsstationen sind hier nicht von Interesse, weshalb hierauf nicht weiter eingegangen wird.

Die Transportwagen 16 laufen in einer einspurigen Tragschiene 18, welche ein unteres Führungsprofil 20 und ein vertikal darüber verlaufendes oberes Führungsprofil 22 umfasst, die mittels mehrerer, nicht eigens mit einem Bezugszeichen versehenen Haltebleche am Boden der Anlage 10 verankert sind.

Zwischen den Führungsprofilen 20, 22 verbleibt ein Freiraum, der einen Koppelbereich 24 bildet. In dem unteren Führungsprofil 20 der Tragschiene 18 läuft eine Endlos-Antriebskette 26, die als Endlos-Antriebsmittel eine Vielzahl von Mitnehmern 28 mit sich führt. Die Mitnehmer 28 ragen nach oben von der Antriebskette 26 ab und in den Koppelbereich 24 der Tragschiene 18 hinein.

In dem oberen Führungsprofil 22 der Tragschiene 18 läuft ein Fahrwerk 30 des Transportwagens 16, welches hierzu in an und für sich bekannter Weise lastaufnehmende Laufrollen lagert und welches in ebenfalls an und für sich bekannter Weise durch Führungsrollen sowohl gegen ein Verkippen in Fahrrichtung als auch gegen ein Verkippen zur Seite stabilisiert ist.

Das Fahrwerk 30 trägt einen Koppelstutzen 32, der nach unten in den Koppelbereich 24 der Tragschiene 18 hinein ragt, so dass einer der Mitnehmer 28 der Antriebskette 26 gegen den Koppelstutzen 32 anstoßen kann, wodurch der Transportwagen 16 von der umlaufenden Antriebskette 26 mitgeführt wird.

Das Fahrwerk 30 führt eine Trageinrichtung 34 für die Werkstücke mit sich. Diese umfasst einen mit dem Fahrwerk verbundenen Lagerblock 36, welcher eine Werkstückspindel 38 um deren Längsachse drehbar lagert. Die Werkstückspindel 38 weist an ihrem vom Lagerblock 36 abliegenden Ende eine Werkstückaufnahme 40 auf, die beim vorliegenden Ausführungsbeispiel als Auflageteller mit einem Nabendolch für Fahrzeugräder ausgebildet ist.

Wie oben erwähnt, werden auch die Werkstückspindeln 38 zumindest teilweise benetzt, wenn die von dem Spindelförderer 12 geförderten Werkstücke in den Behandlungsstationen der Oberflächenbehandlungsanlage 10 mit Lack beaufschlagt werden, und müssen von Zeit zu Zeit gereinigt werden.

Hierzu umfasst der Spindelförderer 12 eine Reinigungszone 42 für die Werkstückspindeln 38, die als Sonderabschnitt des Spindelförderers 12 einen Reinigungsbereich 44 umfasst, dem die unbeladenen, zu reinigenden Transportwagen 16 über einen Zulaufabschnitt 46 der Tragschiene 18 zugeführt werden. In dem Reinigungsbereich 44 befindet sich eine Reinigungsstation 48, die beim vorliegenden Ausführungsbeispiel als Sprüheinheit ausgebildet ist, mit welcher eine Reinigungslösung versprüht werden kann. An den Reinigungsbereich 44 schließt sich ein Auslaufabschnitt 50 der Tragschiene 18 an, über welchen die Transportwagen 16 mit nun gereinigten Werkstückspindeln 38 von Reinigungsbereich 44 zu einem nicht eigens gezeigten Trocknungsbereich geführt werden und die Reinigungszone 42 verlassen. In dem Trocknungsbereich werden die gereinigten Werkstückspindeln 38 beispielsweise mit Druckluft trocken geblasen.

Wenn die Transportwagen 16 durch die Behandlungsstationen der Oberflächenbehandlungsanlage 10 fahren oder sich im Zulaufabschnitt 46 oder im Auslaufabschnitt 50 der Tragschiene 18 befinden, nehmen die Werkstückspindeln 38 eine Förderstellung ein. Beim vorliegenden Ausführungsbeispiel verläuft die Längsachse der Werkstückspindeln 38 in der Förderstellung vertikal.

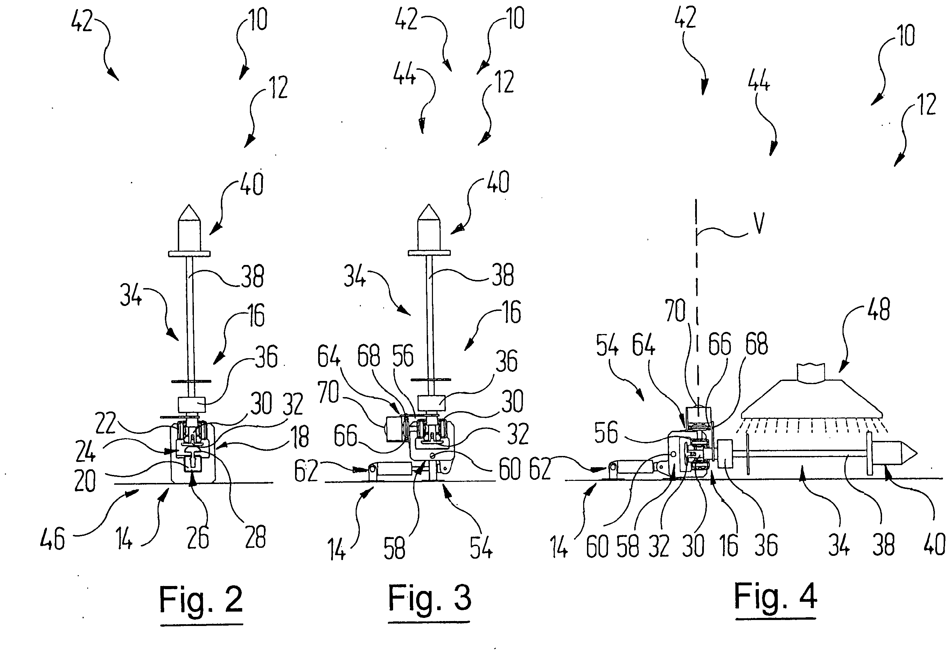

Wie in Figur 4 zu erkennen ist, werden die Werkstückspindeln 38 im Reinigungsbereich 44 demgegenüber in einer von der Förderstellung verschiedenen Sonderstellung gereinigt. Diese Sonderstellung wird nachstehend als Reinigungsstellung bezeichnet.

In dieser Reinigungsstellung ist die Werkstückspindel 38 eines Transportwagens 16 gegenüber einer vertikalen Ebene V verkippt, die parallel zu einer Transportrichtung 52 verläuft, in der die Transportwagen 16 durch den Reinigungsbereich 44 der Reinigungszone 42 geführt werden. Die Transportrichtung 52 ist nur in Figur 1 gezeigt.

Damit die Werkstückspindeln 38 ihre Reinigungsstellung einnehmen können, ist eine Kippeinrichtung 54 vorhanden. Die Kippeinrichtung 54 umfasst beim vorliegenden Ausführungsbeispiel eine Kippschiene 56 für das Fahrwerk 30 der Transportwagen 16, welche komplementär zu dem oberen Führungsprofil 22 der Tragschiene 18 ausgebildet und im Reinigungsbereich 44 der Reinigungszone 42 zwischen dem Zulaufabschnitt 46 und dem Auslaufabschnitt 50 der Tragschiene 18 angeordnet ist. In einer Standard-Förderstellung fluchtet die Kippschiene 56 der Kippeinrichtung 54 mit dem oberen Führungsprofil 22 sowohl des Zulaufabschnitts 46 als auch des Auslaufabschnitts 50 der Tragschiene 18. Die Kippschiene 56 ist über eine Gelenkeinheit 58 am Boden der Anlage 10 verankert und kann als Ganzes aus dieser Standard-Förderstellung um eine horizontale Schwenkachse 60 zur Seite in eine Kippstellung verkippt werden, in der sie noch immer parallel zur Transportrichtung 52 verläuft.

Hierzu ist die Schwenkschiene 56 der Kippeinrichtung 54 mit einem Zylinderantrieb 62 gekoppelt, der beispielsweise pneumatisch oder hydraulisch betrieben werden kann. Wenn die Kippschiene 56 der Kippeinrichtung 54 verkippt wird, bewegt sie einen darin geführten Transportwagen 16 mit sich, so dass dessen Werkstückspindel 38 auf diese Weise in die gegenüber der vertikalen Ebene V verkippte Reinigungsstellung gebracht werden kann.

Um einen Transportwagen 16 im Reinigungsbereich 44 anzutreiben, umfasst die Kippeinrichtung 54 einen eigenen Kettenantrieb 64 mit einer umlaufenden Kette 66, die entlang der Kippschiene 56 geführt ist. Die Kette 66 trägt mehrere Mitnehmer 68, die an dem Fahrwerk 30 der Transportwagen 16 angreifen können, wodurch ein Transportwagen 16 durch den Reinigungsbereich 44 und die Reinigungsstation 48 hindurch gefördert wird, wenn die Kette 66 umläuft. Die Kette 66 ist mit einem Antrieb 70 gekoppelt. Durch den Kettenantrieb 64 können Transportwagen 16, die sich in dem Reinigungsbereich 44 befinden, unabhängig von Transportwagen 16 angetrieben werden, die sich nicht im Reinigungsbereich 44 befinden.

Beim vorliegenden Ausführungsbeispiel verläuft die Längsachse der Werkstückspindel 38 in der Reinigungsstellung horizontal, wozu die Kippschiene 56 entsprechend um 90° zur Seite verkippt wird. Es kann jedoch ausreichen, dass die Werkstückspindel 38 lediglich zu einer horizontalen Ebene geneigt verläuft, um zu vermeiden, dass Verunreinigungen, z.B. mit Lackresten beladene Reinigungslösung, die beim Reinigungsvorgang von der Werkstückspindel 38 nach unten abtropfen, auf den Transportwagen 16 oder das Schienensystem 14 fallen.

Ein Transportwagen 16 mit zu reinigender Werkstückspindel 38 wird also über den Zulaufabschnitt 46 der Tragschiene 18 zum Reinigungsbereich 44 der Reinigungszone 42 geführt. Der Transportwagen 16 wird an die Kippschiene 56 übergeben, indem die Antriebskette 26 kurz vor der Kippeinrichtung 54 zur Seite von dem Zulaufabschnitt 46 weggeführt wird; die Antriebskette 26 wird dann am Reinigungsbereich 44 vorbei und zum Auslaufabschnitt 50 der Tragschiene 18 geführt.

Der Transportwagen 16 fährt frei und zunächst ohne Antrieb in die Kippschiene 56 ein, bis er auf einen Mitnehmer 68 der Kette 66 aufläuft, die bei deaktiviertem Antrieb 70 zunächst stillsteht. Hierdurch wird der Transportwagen 16 in seiner Bewegung gestoppt.

Dann wird die Kippschiene 56 zusammen mit dem Transportwagen 16 mittels des Zylinderantriebs 62 verkippt und der Transportwagen 16 in seiner nun verkippten Lage entlang der Kippschiene 56 zur Reinigungsstation 48 gefördert, indem der Antrieb 70 für die Kette 64 aktiviert wird.

Nachdem die Werkstückspindel 38 in der Reinigungsstation 48 gereinigt und aus der Reinigungsstation 48 heraus bewegt worden ist, wird der Kettenantrieb 70 deaktiviert und die Kippschiene 56 wieder in ihre Standard-Förderstellung bewegt. Dann wird der Kettenantrieb 70 erneut aktiviert, wodurch der Transportwagen 16 aus der Kippschiene 56 heraus geschoben wird und in den Auslaufabschnitt 50 der Tragschiene 18 einfährt, wo er von der Antriebskette 26 aufgenommen und wieder in den Behandlungskreislauf der Werkstücke zurückgeführt wird.

Der Bewegungsablauf beim Reinigen der Werkstückspindeln 38 ist bei der Kippeinrichtung 54 somit insgesamt intermittierend. Solange sich die Transportwagen 16 auf der Kippschiene 56 befinden, können sich dennoch kontinuierlich durch die Reinigungsstation 48 gefördert werden.

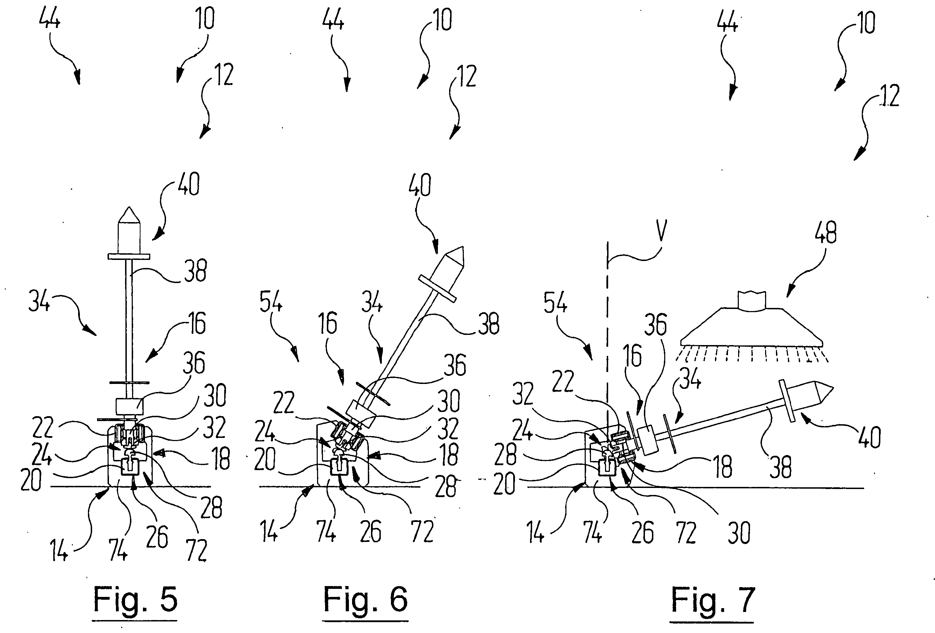

In den Figuren 5 bis 7 ist als zweites Ausführungsbeispiel ein abgewandelter Spindelförderer 12 gezeigt, der eine kontinuierliche Bewegung der Transportwagen 16 durch den Reinigungsbereich 44 erlaubt und bei dem Komponenten, die den bereits oben erläuterte Komponenten entsprechen, dieselben Bezugszeichen tragen.

Bei diesem Spindelförderer 12 umfasst die Kippeinrichtung 54 im Reinigungsbereich 44 keine von der Tragschiene 18 getrennte Kippschiene 56. Vielmehr ist die Kippeinrichtung 54 dadurch ausgebildet, dass die Tragschiene 18 im Reinigungsbereich 44 einen Teiltorsionsabschnitt 72 aufweist. Dieser Teiltorsionsabschnitt 72 der Tragschiene 18 zeichnet sich dadurch aus, dass das untere Führungsprofil 20 mit der Antriebskette 26 unverändert vom Zulaufabschnitt 46 zum Auslaufabschnitt 50 der Tragschiene 18 weitergeführt wird, wogegen das obere Führungsprofil 22 der Tragschiene 18 zunächst in Längsrichtung tordiert und in einem leichten Bogen gegenüber dem unteren Führungsprofil 20 zur Seite versetzt und nach unten geführt wird.

Der Verlauf und die Geometrie des oberen Führungsprofils 22 der Tragschiene 18 ist dabei derart, dass einerseits der Koppelstutzen 32 eines sich im Teiltorsionsabschnitt 72 befindlichen Transportwagens 16 stets in Kontakt mit einem der Mitnehmer 28 der Antriebskette 26 bleiben kann und andererseits der Transportwagen 16 beim Durchfahren des Teiltorsionsabschnitts 72 als Einheit verkippt wird, bis dessen Werkstückspindel 38 ihre Reinigungsstellung einnimmt.

Wie in Figur 7 gut zu erkennen ist, verläuft die Längsachse der Werkstückspindel 38 bei diesem Ausführungsbeispiel in der Reinigungsstellung nicht horizontal. Die Werkstückspindel 38 ist jedoch so weit gegenüber der vertikalen Ebene V verkippt, dass keine herabtropfenden Verunreinigungen auf den Transportwagen 16 oder das Schienensystem 14 treffen können. Gegebenenfalls kann das obere Führungsprofil 22 der Tragschiene 18 jedoch auch weiter tordiert werden, bis die Werkstückspindel 38 am tiefsten Punke horizontal ausgerichtet ist.

Das obere Führungsprofil 22 der Tragschiene 18 behält diese Torsionskonfiguration über einen durch die Reinigungsstation 48 führenden Teilabschnitt bei. Hiernach wird das obere Führungsprofil 22 der Tragschiene 18 zurück tordiert und in einem entsprechenden leichten Bogen wieder nach oben und innen geführt, bis das obere Führungsprofil 22 im Teiltorsionsabschnitt 72 der Tragschiene 18 wieder dieselbe Konfiguration und Position gegenüber dem unteren Führungsprofil 20 hat wie das obere Führungsprofil 22 im Auslaufabschnitt 50 der Tragschiene 18.

Im Reinigungsbereich 44 werden das obere Führungsprofil 22 und das untere Führungsprofil 20 der Tragschiene wieder durch Haltebleche in Position gehalten, die hier mit 74 bezeichnet und an den Verlauf und die Ausrichtung der beiden Führungsprofile 20 und 22 zueinander angepasst sind.

Bei diesem Ausführungsbeispiel des Spindelförderers 12 laufen Transportwagen 16 mit zu reinigender Werkstückspindel 38 ohne Stillstand aus dem Zulaufabschnitt der Tragschiene 18 in deren Teiltorsionsabschnitt 72 ein, werden durch diesen hindurch geführt, dabei zur Seite verkippt und wieder zurückgeschwenkt, um ebenfalls kontinuierlich in den Auslaufabschnitt 50 der Tragschiene 18 einzulaufen und von dort weitergefördert zu werden. Dabei greift stets ein und derselbe Mitnehmer 28 der Antriebskette 26 an dem Koppelstutzen 32 eines bestimmten Transportwagens 16 an.

Damit das Fahrwerk 30 der Transportwagen 16 durch das tordierte obere Führungsprofil 22 fahren kann, sind dessen Lauf- und Führungsrollen beispielsweise federgelagert, so dass sie einen ausreichenden Bewegungsspielraum haben und der Torsion des oberen Führungsprofils 22 folgen können, ohne dass das Fahrwerk 30 seine Gesamtstabilität verliert.

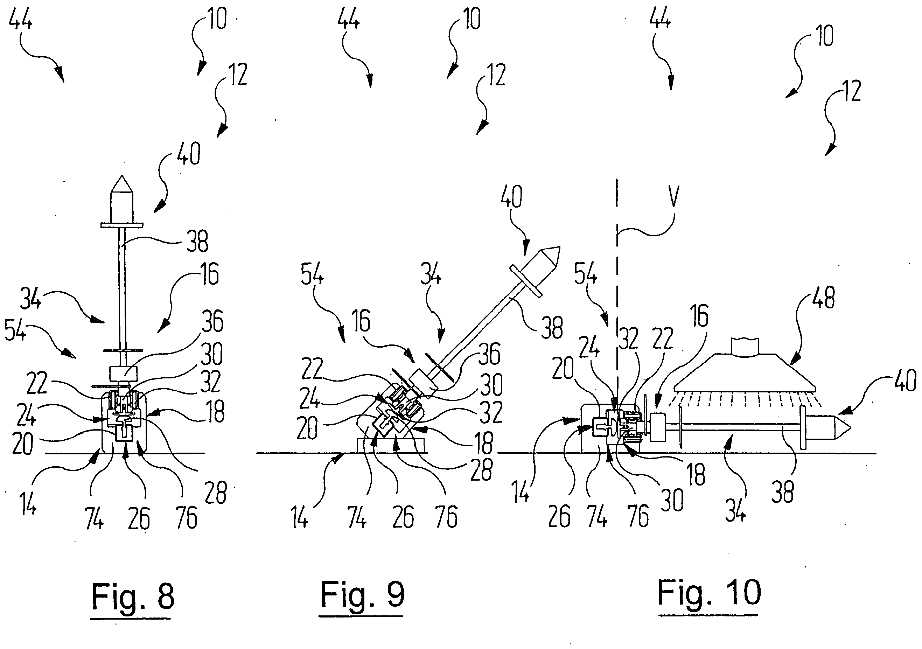

In den Figuren 8 bis 10 ist als drittes Ausführungsbeispiel ein nochmals abgewandelter Spindelförderer 12 gezeigt, der ebenfalls eine kontinuierliche Bewegung der Transportwagen 16 durch den Reinigungsbereich 44 erlaubt und bei dem Komponenten, die den oben erläuterte Komponenten und Bauteilen entsprechen, erneut dieselben Bezugszeichen tragen.

Bei diesem Spindelförderer 12 ist die Kippeinrichtung 54 dadurch ausgebildet, dass die Tragschiene 18 im Reinigungsbereich 44 der Reinigungszone 42 einen Volltorsionsabschnitt 76 aufweist. Dieser Volltorsionsabschnitt 76 der Tragschiene 18 zeichnet sich im Gegensatz zum oben erläuterten Teiltorsionsabschnitt 72 dadurch aus, dass das obere Führungsprofil 22 und das untere Führungsprofil 20 in sich tordiert werden und zugleich ein Profilpaar bilden, welches außerdem als Einheit tordiert wird.

Dabei wird das obere Führungsprofil 22 der Tragschiene 18 ebenso geführt und tordiert, wie es bei dem obere Führungsprofil 22 der Tragschiene 18 in dem Teiltorsionsabschnitt 72 nach den Figuren 5 bis 7 der Fall ist. Das untere Führungsprofil 20 der Tragschiene 18 wird dagegen in deren Volltorsionsabschnitt 76 lediglich um seine Längsachse verwunden, ohne dass es seitlich oder vertikal versetzt wird.

Auch bei dieser Torsionskonfiguration der Tragschiene 18 kann der Koppelstutzen 32 eines sich im Volltorsionsabschnitt 76 befindlichen Transportwagens 16 stets in Kontakt mit einem der Mitnehmer 28 der Antriebskette 26 bleiben, wobei der Transportwagen 16 beim Durchfahren des Volltorsionsabschnitts 76 als Einheit verkippt wird, bis dessen Werkstückspindel 38 ihre Reinigungsstellung einnimmt. Die Antriebskette 26 muss bei diesem Ausführungsbeispiel entsprechend derart ausgebildet sein, dass sie in Längsrichtung verwunden werden kann, damit deren Mitnehmer 28 stets in Anlage an die Koppelstutzen 32 der Transportwagen 16 bleiben können.

Wie Figur 10 zeigt, verläuft die Längsachse der Werkstückspindel 38 bei diesem Ausführungsbeispiel in der Reinigungsstellung wieder horizontal.

Die Tragschiene 18 behält die Torsionskonfiguration wieder über einen durch die Reinigungsstation 48 führenden Teilabschnitt bei. Dahinter wird die Tragschiene 18 wieder in ihre Standardkonfiguration rücktordiert, d.h. ihre Torsion wird aufgehoben. In der Standardkonfiguration geht sie dann in den Auslaufabschnitt 50 über.

Auch bei diesem Ausführungsbeispiel werden das obere Führungsprofil 22 und das untere Führungsprofil 20 der Tragschiene im Reinigungsbereich durch Haltebleche 74 in Position gehalten, die an den Verlauf und die Ausrichtung der beiden Führungsprofile 20 und 22 zueinander angepasst sind.

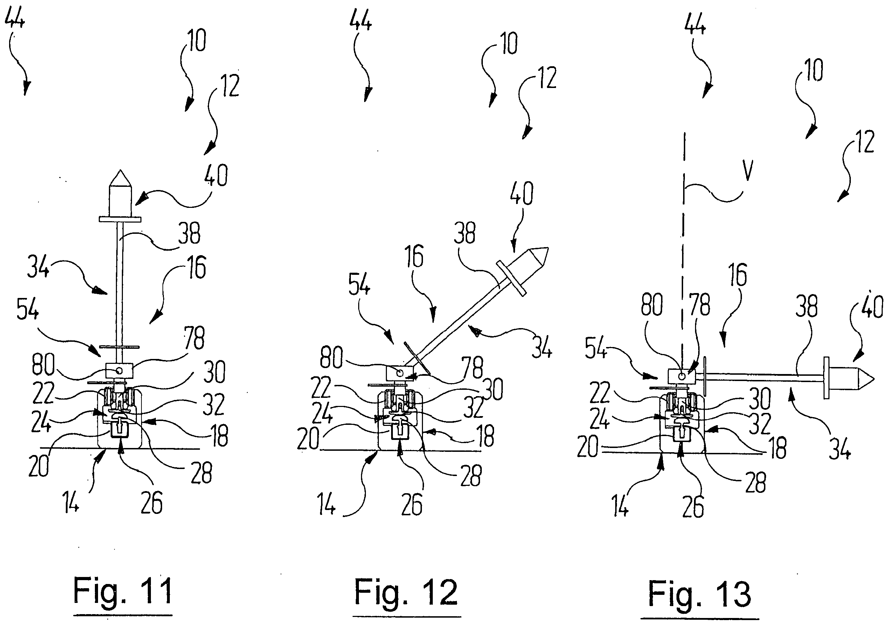

In den Figuren 11 bis 13 ist als viertes Ausführungsbeispiel ein abermals abgewandelter Spindelförderer 12 gezeigt, der ebenfalls eine kontinuierliche Bewegung der Transportwagen 16 durch den Reinigungsbereich 44 erlaubt und bei dem bereits oben erläuterte Komponenten und Bauteile erneut dieselben Bezugszeichen tragen.

Dort ist die Tragschiene 18 im Reinigungsbereich 44 der Reinigungszone 42 baugleich zu deren Ausbildung im Zulaufabschnitt 46 und im Auslaufabschnitt 50. Auch die Antriebskette 26 wird ohne Modifikationen aus dem Zulaufabschnitt 46 durch die Tragschiene 18 in den Auslaufabschnitt 50 geführt.

Damit die Werkstückspindel 38 eines Transportwagens 16 nun ihre Reinigungsstellung einnehmen kann, ist die Kippeinrichtung 54 dadurch gebildet, dass die Werkstückspindel 38 an ihrem von der Werkstückaufnahme 40 abliegenden unteren Ende über ein Gelenk 78 mit dem Fahrwerk 30 des Transportwagens 16 gekoppelt ist. An dem Gelenk 78 kann die Werkstückspindel 38 um eine Schwenkachse 80, die parallel zur Transportrichtung 52 verläuft, zur Seite abgeknickt werden, wie es in den Figuren 12 und 13 veranschaulicht ist.

Hierzu kann beispielsweise eine nicht eigens gezeigte Kulissenführung neben der und parallel zur Tragschiene 18 vorhanden sein, durch welche die Werkstückspindel 38 die Knickbewegung zwangsgeführt vollzieht, wenn ein Transportwagen 16 durch den Reinigungsbereich 44 gefördert wird.

Entsprechend kann jede Werkstückspindel 38 durch eine analoge Kulissenführung nach Durchlaufen der Reinigungsstation 48 wieder in ihre vertikale Förderstellung aufgerichtet werden.

Die Werkstückspindeln 38 können beim Reinigungsvorgang um ihre Längsachse verdreht werden.

## Patentansprüche

1. Spindelförderer zum Fördern von Werkstücken, insbesondere von Fahrzeugrädern, mit
a) einem Schienensystem (14), welches wenigstens eine Tragschiene (18) umfasst;
b) mehreren Transportwagen (16), die jeweils ein auf der Tragschiene (18) in eine Transportrichtung (52) verfahrbares Fahrwerk (30) und eine Trageinrichtung (34) für Werkstücke umfassen, die von dem Fahrwerk (30) mitgeführt wird;
wobei
c) die Trageinrichtung (34) wenigstens eine Werkstückspindel (38) zur Aufnahme des Werkstücks umfasst,
**dadurch gekennzeichnet, dass**
d) die Werkstückspindel (38) eines auf dem Schienensystem (14) befindlichen Transportwagens (16) zumindest in einem Reinigungsbereich (44) des Spindelförderers (12), in dem eine Reinigungseinrichtung (48) angeordnet ist, mittels welcher die Werkstückspindeln (38) der Transportwagen (14) gereinigt werden können, zwischen einer Förderstellung und einer von der Förderstellung verschiedenen Reinigungsstellung verschwenkbar ist;
e) die Werkstückspindel (38) in der Reinigungsstellung gegenüber einer vertikalen Ebene (V), die parallel zur Transportrichtung (52) verläuft, verkippt ist.

2. Spindelförderer nach Anspruch 1, **dadurch gekennzeichnet, dass** eine Kippeinrichtung (54) vorhanden ist, mittels welcher die Werkstückspindel (38) eines Transportwagens (16) zumindest in dem Reinigungsbereich (44) in die Reinigungsstellung und wieder zurück in die Förderstellung bewegbar ist.

3. Spindelförderer nach Anspruch 2, **dadurch gekennzeichnet, dass** die Kippeinrichtung (54) eine im Reinigungsbereich (44) angeordnete Kippschiene (56) umfasst, auf der Transportwagen (16) verfahrbar sind und die mittels eines Antriebs (62) um eine Schwenkachse (60) verschwenkbar ist, die parallel zur Transportrichtung (52) verläuft.

4. Spindelförderer nach Anspruch 2 oder 3, **dadurch gekennzeichnet, dass** die Kippeinrichtung (54) einen separaten Antrieb (64) für Transportwagen (16) umfasst, mittels welchem Transportwagen (16), die sich in dem Reinigungsbereich (44) befinden, unabhängig von Transportwagen (16) antreibbar sind, die sich nicht im Reinigungsbereich (44) befinden.

5. Spindelförderer nach Anspruch 2, **dadurch gekennzeichnet, dass** die Kippeinrichtung (54) durch einen Torsionsabschnitt (72; 76) der Tragschiene (18) ausgebildet ist, in dem zumindest ein das Fahrwerk (30) der Transportwagen (16) führendes Führungsprofil (20) der Tragschiene (18) so tordiert ist, dass Transportwagen (18) beim Durchfahren des Torsionsabschnitts (72; 76) zur Seite verkippt werden, bis deren Werkstückspindel (38) ihre Reinigungsstellung einnimmt.

6. Spindelförderer nach Anspruch 5, **dadurch gekennzeichnet, dass** die Tragschiene (18) ein Profilpaar (20, 22) aus einem Führungsprofil (22) für das Fahrwerk (30) der Transportwagen (16) und einem Führungsprofil (20) für eine Antriebskette (26) umfasst, wobei die Führungsprofile (20, 22) jeweils in sich und als Profilpaar (20, 22) so tordiert werden, dass Transportwagen (16) beim Durchfahren des Torsionsabschnitts (76) zur Seite verkippt werden, bis deren Werkstückspindel (38) ihre Reinigungsstellung einnimmt.

7. Spindelförderer nach Anspruch 2, **dadurch gekennzeichnet, dass** die Kippeinrichtung (54) als Gelenk (78) ausgebildet ist, mittels welchem die Werkstückspindel (38) an dem Fahrwerk (30) des Transportwagens (16) gelagert ist, so dass die Werkstückspindel (38) aus der Förderstellung um eine Schwenkachse (80), die parallel zur Transportrichtung (52) verläuft, in die Reinigungsstellung abgeknickt werden kann.

8. Anlage zum Behandeln von Werkstücken, insbesondere von Fahrzeugrädern, mit einem Fördersystem, mittels welchem die Werkstücke durch die Anlage (10) förderbar sind,
**dadurch gekennzeichnet, dass**
das Fördersystem ein Spindelförderer (12) nach einem der Ansprüche 1 bis 7 ist.

## Claims

1. Spindle conveyor for conveying workpieces, in particular vehicle wheels, having
a) a rail system (14), which comprises at least one supporting rail (18);
b) a plurality of transport carriages (16), which each comprise a running gear (30) that is movable on the supporting rail (18) in a transporting direction (52) and a supporting device (34) for workpieces that are carried along by the running gear (30);
wherein
c) the supporting device (34) comprises at least one workpiece spindle (38) for receiving the workpiece,
**characterized in that**
d) the workpiece spindle (38) of a transport carriage (16) located on the rail system (14) at least in a cleaning region (44) of the spindle conveyor (12), in which there is disposed a cleaning device (48), by means of which the workpiece spindles (38) of the transport carriages (14) can be cleaned, is pivotable between a conveying position and a cleaning position that is different from the conveying position;
e) the workpiece spindle (38) in the cleaning position is tilted with respect to a vertical plane (V) that extends parallel to the transporting direction (52).

2. Spindle conveyor according to claim 1, **characterized in that** there is a tilt device (54), by means of which the workpiece spindle (38) of a transport carriage (16), at least in the cleaning region (44), can be moved into the cleaning position and back again into the conveying position.

3. Spindle conveyor according to claim 2, **characterized in that** the tilt device (54) comprises a tilt rail (56), which is disposed in the cleaning region (44) and on which transport carriages are movable (16) and which, by means of a drive (62), is pivotable about a pivot axis (60) extending parallel to the transporting direction (52).

4. Spindle conveyor according to claim 2 or 3, **characterized in that** the tilt device (54) comprises a separate drive (64) for transport carriages (16), by means of which drive transport carriages (16) located in the cleaning region (44) can be driven independently of transport carriages (16) not located in the cleaning region (44).

5. Spindle conveyor according to claim 2, **characterized in that** the tilt device (54) is constituted by a twist portion (72; 76) of the supporting rail (18), in which at least a guide profile (20) of the supporting rail (18) that guides the running gear (30) of the transport carriages (16) is twisted, such that transport carriages (18) are tilted sideways as they pass through the twist portion (72; 76), until their workpiece spindle (38) assumes its cleaning position.

6. Spindle conveyor according to claim 5, **characterized in that** the supporting rail (18) comprises a profile pair (20, 22) consisting of a guide profile (22) for the running gear (30) of the transport carriages (16) and of a guide profile (20) for a drive chain (26), the guide profiles (20, 22) each being twisted in themselves and as a profile pair (20, 22), such that transport carriages (16) are tilted sideways as they pass through the twist portion (76), until their workpiece spindle (38) assumes its cleaning position.

7. Spindle conveyor according to claim 2, **characterized in that** the tilt device (54) is realized as a joint (78), by means of which the workpiece spindle (38) is mounted on the running gear (30) of the transport carriage (16), such that the workpiece spindle (38) can be folded out of the conveying position about a pivot axis (80), which extends parallel to the transporting direction (52), into the cleaning position.

8. Plant for treating workpieces, in particular vehicle wheels, having a conveying system by means of which the workpieces can be conveyed through the plant (10),
**characterized in that**
the conveying system is a spindle conveyor (12) according to one of claims 1 to 7.

## Revendications

1. Convoyeur à broches pour le transport de pièces, en particulier de roues de véhicules, avec
a) un système de rails (14), qui comprend au moins un rail porteur (18) ;
b) plusieurs chariots de transport (16), qui comprennent chacun un mécanisme de roulement (30) pouvant se déplacer sur le rail porteur (18) dans une direction de transport (52) et un dispositif porteur (34) pour des pièces, qui est entraîné par le mécanisme de roulement (30) ;
sachant
c) que le dispositif porteur (34) comprend au moins une broche porte-pièce (38) destinée à recevoir la pièce,
**caractérisé en ce que**
d) la broche porte-pièce (38) d'un chariot de transport (16) se trouvant sur le système de rails (14) peut, au moins dans une région de nettoyage (44) du convoyeur à broches (12) dans laquelle est disposé un dispositif de nettoyage (48) au moyen duquel les broches porte-pièce (38) des chariots de transport (16) peuvent être nettoyées, pivoter entre une position de transport et une position de nettoyage différente de la position de transport ;
e) la broche porte-pièce (38), dans la position de nettoyage, est basculée par rapport à un plan vertical (V) qui s'étend parallèlement à la direction de transport (52).

2. Convoyeur à broches selon la revendication 1, **caractérisé en ce qu'**un dispositif de basculement (54) est présent, au moyen duquel la broche porte-pièce (38) d'un chariot de transport (16) peut, au moins dans la région de nettoyage (44), être déplacée dans la position de nettoyage et en retour dans la position de transport.

3. Convoyeur à broches selon la revendication 2, **caractérisé en ce que** le dispositif de basculement (54) comprend un rail basculant (56) disposé dans la région de nettoyage (44), sur lequel les chariots de transport (16) peuvent être déplacés et qui, au moyen d'un entraînement (62), peut pivoter autour d'un axe de pivotement (60) qui s'étend parallèlement à la direction de transport (52).

4. Convoyeur à broches selon la revendication 2 ou 3, **caractérisé en ce que** le dispositif de basculement (54) comprend un entraînement séparé (64) pour des chariots de transport (16), au moyen duquel des chariots de transport (16) qui se trouvent dans la région de nettoyage (44) peuvent être entraînés indépendamment de chariots de transport (16) qui ne se trouvent pas dans la région de nettoyage (44).

5. Convoyeur à broches selon la revendication 2, **caractérisé en ce que** le dispositif de basculement (54) est formé par une portion de torsion (72 ; 76) du rail porteur (18), dans laquelle au moins un profilé de guidage (20), guidant le mécanisme de roulement (30) des chariots de transport (16), du rail porteur (18) est tordu de telle sorte que les chariots de transport (16), lorsqu'ils franchissent la portion de torsion (72 ; 76), sont basculés sur le côté jusqu'à ce que leur broche porte-pièce (38) prenne sa position de nettoyage.

6. Convoyeur à broches selon la revendication 5, **caractérisé en ce que** le rail porteur (18) comprend une paire de profilés (20, 22) constituée d'un profilé de guidage (22) pour le mécanisme de roulement (30) des chariots de transport (16) et d'un profilé de guidage (20) pour une chaîne d'entraînement (26), sachant que les profilés de guidage (20, 22) sont, chacun en soi et en tant que paire de profilés (20, 22), tordus de telle sorte que les chariots de transport (16), lorsqu'ils franchissent la portion de torsion (76), sont basculés sur le côté jusqu'à ce que leur broche porte-pièce (38) prenne sa position de nettoyage.

7. Convoyeur à broches selon la revendication 2, **caractérisé en ce que** le dispositif de basculement (54) est réalisé sous la forme d'une articulation (78) au moyen de laquelle la broche porte-pièce (38) est montée sur le mécanisme de roulement (30) du chariot de transport (16), de sorte que la broche porte-pièce (38) peut être infléchie de la position de transport dans la position de nettoyage autour d'un axe de pivotement (80) qui s'étend parallèlement à la direction de transport (52).

8. Installation de traitement de pièces, en particulier de roues de véhicules, avec un système de transport au moyen duquel les pièces peuvent être transportées à travers l'installation (10), **caractérisée en ce que** le système de transport est un convoyeur à broches (12) selon l'une des revendications 1 à 7.
